# EUROPÄISCHE PATENTSCHRIFT

(11) **EP 0 912 397 B1**
(45) Veröffentlichungstag und Bekanntmachung des Hinweises auf die Patenterteilung: **12.04.2000**
(21) Anmeldenummer: 97929114.3
(22) Anmeldetag: 19.06.1997
(51) Int. Cl.: B65B 1/36

(54) **SCHÜTTGUTABMESSVORRICHTUNG MIT SCHUTZGASATMOSPHÄRE**
BULK MATERIAL MEASURING DEVICE WITH PROTECTIVE ATMOSPHERE
DISPOSITIF DE DOSAGE DE PRODUITS EN VRAC SOUS ATMOSPHERE INERTE

(30) Priorität: 11.07.1996 DE 19627851
(43) Veröffentlichungstag der Anmeldung: 06.05.1999
(73) Patentinhaber: ROBERT BOSCH GMBH, 70442 Stuttgart (DE)
(72) Erfinder: DOMKE, Klaus, D-71254 Ditzingen (DE); STOTKIEWITZ, Herbert, D-74321 Bietigheim-Bissingen (DE)
(86) Internationale Anmeldenummer: DE9701258
(87) Internationale Veröffentlichungsnummer: WO9802353

(56) Entgegenhaltungen:
- EP-A- 0 319 131
- DE-A- 4 343 317

## Beschreibung

### Stand der Technik

Die Erfindung geht aus von einer Vorrichtung zum volumetrischen Abmessen von Schüttgutmengen in einer Schutzgasatmosphäre nach der Gattung des Anspruchs 1. Bei bekannten Abmeß- und Abfüllvorrichtungen dieser Art ist die eigentliche Abmeß- und Abfüllvorrichtung in einem gekapselten Raum angeordnet, in dem durch laufendes Zuführen von Schutzgas eine gegenüber dem abzufüllenden Schüttgut inerte Atmosphäre aufrechterhalten wird. Ferner wird das abzupackende Schüttgut im Zulaufrohr, das in den gekapselten Raum zu der Abmeßvorrichtung ragt, durch Zuführung von Schutzgas gespült, um die die Gutkörner umgebende Luft zu verdrängen. Insbesondere ist der Schutzgasverbrauch der bekannten Vorrichtung bei Betriebsaufnahme sehr hoch, bis die Luft, insbesondere deren Sauerstoffanteil, auch aus den Winkeln verdrängt worden ist, wenn gesichert sein soll, daß in dem das Gut aufnehmenden Verpackungsbehälter möglichst kein Restsauerstoff mehr enthalten ist.

### Vorteile der Erfindung

Die erfindungsgemäße Vorrichtung mit den kennzeichnenden Merkmalen des Anspruchs 1 hat demgegenüber den Vorteil, daß sofort beim Start der Vorrichtung von Luft befreite Gutportionen abgemessen werden, so daß der Betrieb ohne Vorlauf aufgenommen werden kann. Außerdem ist Schutzgas lediglich für die eigentliche Spülung erforderlich; ein Aufrechterhalten einer Schutzgasatmosphäre in einem die Vorrichtung umgebenden Gasraum ist nicht erforderlich.

Durch die in den Unteransprüchen aufgeführten Maßnahmen sind vorteilhafte Weiterbildungen der im Anspruch 1 angegebenen Vorrichtung möglich.

### Zeichnung

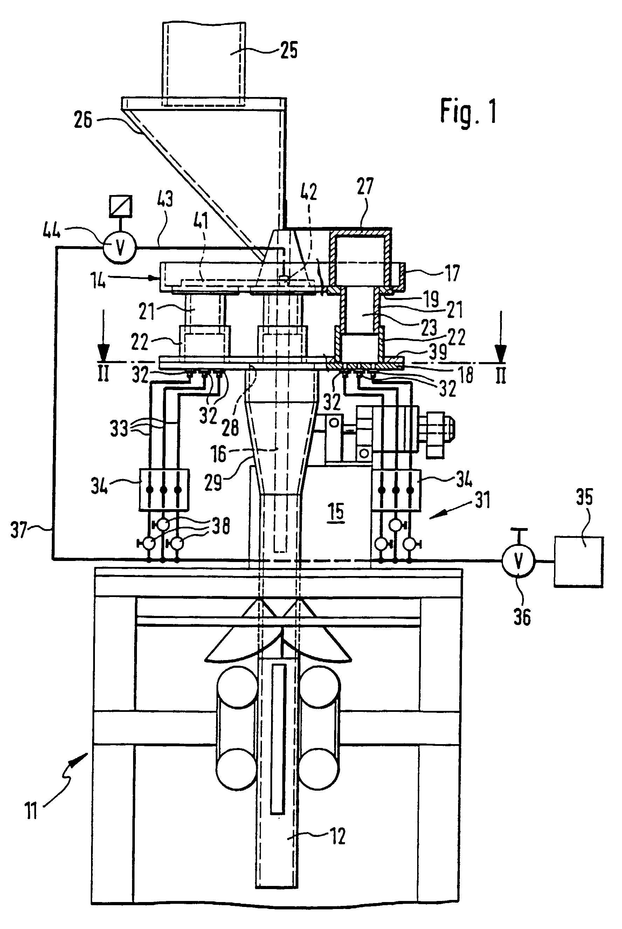

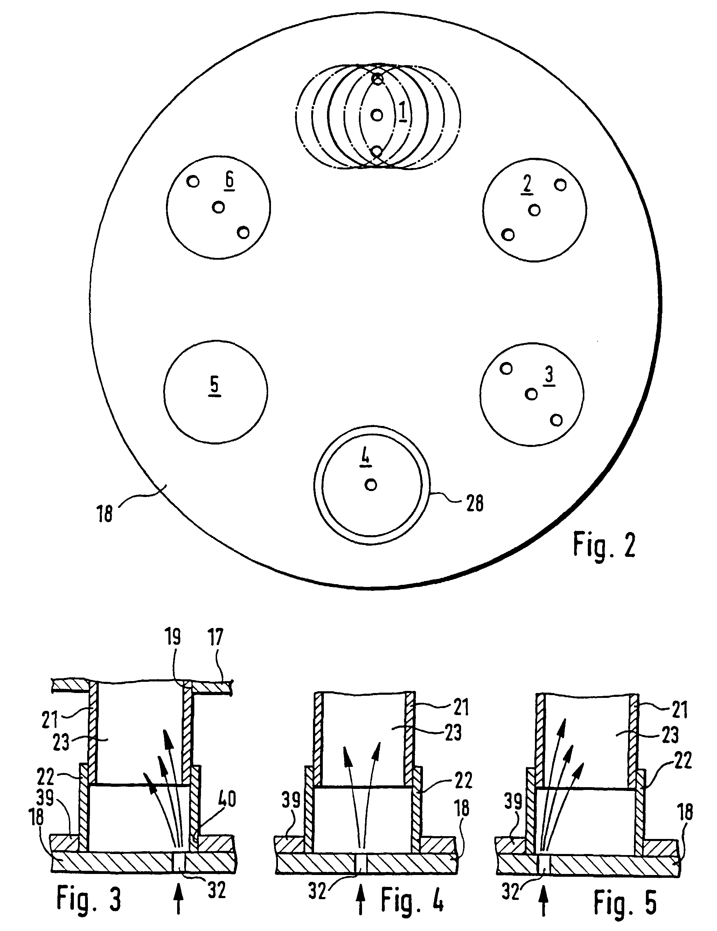

Ein Ausführungsbeispiel der Erfindung ist in der Zeichnung dargestellt und wird im folgenden näher beschrieben. Es zeigen Figur 1 eine Abmeßvorrichtung in Verbindung mit einer Verpackungsvorrichtung in Vorderansicht und teilweise im Schnitt, Figur 2 einen Abschlußteller der Abmeßvorrichtung in Draufsicht in der Ebene II-II der Figur 1 und Figur 3 bis 5 eine Dosierkammer der Abmeßvorrichtung in verschiedenen Phasen der Begasung im Längsschnitt.

### Beschreibung des Ausführungsbeispiels

Auf einer Verpackungsvorrichtung 11, beispielsweise einer sogenannten Schlauchbeutelmaschine, bei der ein Schlauch geformt, dieser an seinem unteren Ende mit einer Bodennaht verschlossen und in den dadurch gebildeten unteren Schlauchabschnitt eine Füllgutmenge durch ein Füllrohr 12 eingebracht sowie danach oberhalb der Füllgutmenge eine Kopfverschlußnaht am Schlauch hergestellt und die so gebildete Beutelpackung vom Schlauch abgetrennt wird, ist zum volumentrischen Abmessen von Einzelmengen eines schüttbaren Füllguts eine Abmeßvorrichtung 14 mit Dosierkammern angeordnet, die in der Fachsprache auch als Tellerdosierer bezeichnet wird.

Die Abmeßvorrichtung 14 hat einen um eine vertikale Achse intermittierend von einem Schrittschaltgetriebe 15 über eine vertikale Welle 16 gedrehten Verteilerteller 17 und in einem bestimmten, veränderlichen Abstand darunter einen deckungsgleichen, ortsfest angeordneten Abschlußteller 18. In auf einem Teilkreis in gleichen Abständen angeordneten Durchbrüchen 19 des Verteilertellers 17 sind nach unten vorstehende Büchsen 21 eingesetzt, in die andere auf dem Abschlußteller 18 aufliegende Büchsen 22 teleskopartig eingreifen, und die zusammen mit diesen beispielsweise sechs Dosierkammern 23 bilden. Durch vertikales Verschieben des Verteilertellers 17 mit den oberen Büchsen 21 ist das Volumen der Dosierkammern 23 in einem bestimmten Bereich verstellbar.

Das in Portionen abzumessende schüttbare Füllgut wird den Dosierkammern 23 von einem Zuführrohr 25 über einen Trichter 26 und eine daran anschließende Füllniere 27 zugeführt. Die hohle und unten offene Füllniere 27 erstreckt sich stationär in einem Bogen über einen Teilbereich des Umlaufwegs der Durchbrüche 19 des Verteilertellers 17, so daß beim Umlaufen des Verteilertellers 17 aus dem Trichter 26 in die Füllniere 27 gelangtes Füllgut teilweise direkt in die Dosierkammern 23 fällt, und teilweise am Ende der Füllniere 27 von deren Abschlußwand bündig mit der Oberseite des Verteilertellers 17 eingestreift wird, wobei der Abschlußteller 18 den Bodenabschluß der Dosierkammern 23 bildet. Auf einer Station, die in Umlaufrichtung des Verteilertellers 17 hinter der Abschlußwand der Füllniere 27 liegt, hat der Abschlußteller 18 einen Durchlaß 28, an den sich nach unten ein in das Füllrohr 12 der Verpackungsvorrichtung 11 mündender Trichter 29 anschließt, und durch den die in einer Dosierkammer 23 abgemessene Gutmenge in das Füllrohr 29 jeweils abgeschüttet wird.

Um die oben beschriebene, an sich bekannte Abmeßvorrichtung 14 so weiterzubilden, daß sauerstoffempfindliches Gut von der umgebenden Luft befreit und in einer Schutzgasatmosphäre in die Verpackungsvorrichtung 11 überführt wird, ist in die Abmeßvorrichtung 14 eine Begasungsvorrichtung 31 integriert. Wesentlicher Bestandteil dieser Begasungseinrichtung 31 ist die Zuführung von Schutzgas in die Dosierkammern 23 vor und während deren Befüllen mit Schüttgut. Dazu sind im Abschlußteller 18 in Deckung mit dem Umlaufweg der Dosierkammern 23 vorzugsweise auf den Stationen 6, 1, 2 und 3 der sechs Stationen 1 bis 6 jeweils eine oder mehrere Durchlässe oder Düsen 32 zum Einblasen von Schutzgas in die Dosierkammern 23 angeordnet, wobei die Stationen 1, 2 und 3 den Füllbereich und die Station 4 die Abschüttstelle für die Dosierkammern 23 bilden. Über Leitungen 33 sind die Düsen 32 mit Gasmengenmessern 34 verbunden, denen Schutzgas aus einem Vorratsbehälter 35 über ein Hauptventil 36, eine Verteilerleitung 37 und Feineinstellventilen 38 zugeleitet wird. Wie die Figuren 3 bis 5 zeigen, wird das Schutzgas an verschiedenen Stellen der Dosierkammer 23 dadurch eingeleitet, daß beim Ein- und Auslaufen aus einer Dosierkammer in bzw. aus einer der Stationen 1, 2, 3 und 6 die Düsen 32 von den Dosierkammern 23 überstrichen werden, wobei eine besonders intensive Gasverteilung in den Dosierkammern 23 erzielt wird. Zum Abschließen der Düsen 32 und 33 in der Zeit, in der keine Dosierkammer in Deckung mit einer der Düsen 32 ist, liegt auf dem Abschlußteller 18 eine Scheibe 39 abdichtend gleitend auf, die im Bereich der Dosierkammern 23 Durchbrüche 40 hat, in denen die unteren Büchsen 22 eingesetzt sind.
Um den Eintritt von Luft in die Dosierkammern 23 der Abschüttstation 4, der freien Station 5 und der Station 6 zu verhindern, liegt auf dem Verteilerteller 17 im Bogenbereich dieser Stationen 4, 5 und 6 eine bogenförmige dünne Abdeckplatte 41 dichtend auf. Damit beim Entleeren einer Dosierkammer 23 auf der Abschüttstation 4 keine Umgebungsluft in die Dosierkammer 23 eingesaugt wird, sind im Bereich der Station 4 in der Abdeckplatte 41 eine oder mehrere Düsen 42 angeordnet, die über eine Zuleitung 43 und ein Schaltventil 44 mit der Verteilerleitung 37 verbunden sind, so daß beim Einlaufen und Entleeren einer Dosierkammer 23 auf der Abschüttstation 4 Schutzgas in die sich leerende Dosierkammer 23 eingeblasen wird.

Ergänzend wird darauf hingewiesen, daß die Düsen 32 im Abschlußteller 18, über die Schüttgut in den gefüllten Dosierkammern 23 hinweggeführt wird, aus einem porösen Werkstoff, beispielsweise Sintermaterial bestehen können.

## Patentansprüche

1. Vorrichtung zum volumetrischen Abmessen von Schüttgutmengen in einer Schutzgasatmosphäre mit einer Schüttgutzuführung (25, 26, 27), mit einem um eine senkrechte Achse umlaufenden Verteilerteller (17) mit mehreren auf einem Teilkreis in gleichen Abständen angeordneten Dosierkammern (23), mit einem ortsfesten zum Verteilerteller (17) deckungsgleichen Abschlußteller (18), der an der Abschüttstelle (4) eine Auslaßöffnung (28) hat, und mit einer Schutzgaszuführeinrichtung, dadurch gekennzeichnet, daß im Abschlußteller (18) im Bereich des Umlaufwegs der Dosierkammer (23) Düsen (32) für Schutzgas angeordnet sind, die mit einer Schutzgasquelle (35) verbunden sind, und daß eine Abdeckplatte (41) die Einfüllöffnung der Dosierkammern (23) auf deren Umlaufweg außerhalb der Schüttgutzuführung (27) dichtend mit dem Verteilerteller (17) abdeckt.

2. Vorrichtung nach Anspruch 1, dadurch gekennzeichnet, daß bei schrittweise gedrehtem Verteilerteller (17) die Durchlässe (32) für das Schutzgas jeweils an den Haltestationen (1, 2, 3, 6) der Dosierkammern (23) angeordnet sind.

3. Vorrichtung nach Anspruch 2, dadurch gekennzeichnet, daß jeweils mehrere Durchlässe (32) für das Schutzgas im Bereich einer Haltestation (1, 2, 3, 6) angeordnet ist.

4. Vorrichtung nach Anspruch 3, dadurch gekennzeichnet, daß in die Zuleitungen (33) für das Schutzgas zu den Durchlässen (32) im Abschlußteller (18) Gasdurchflußmengenmesser (34) geschaltet sind.

5. Vorrichtung nach Anspruch 4, dadurch gekennzeichnet, daß in jeder der Zuleitungen (33) je ein Gasdurchflußmengenmesser (34) angeordnet ist.

6. Vorrichtung nach einem der Ansprüche 1 bis 5, dadurch gekennzeichnet, daß in den Durchlässen (32) für das Schutzgas ein Filter angeordnet ist.

7. Vorrichtung nach Anspruch 6, dadurch gekennzeichnet, daß das Filter aus Sintermaterial besteht.

8. Vorrichtung nach einem der Ansprüche 1 bis 7, dadurch gekennzeichnet, daß deckungsgleich zum Abschlußteller (18) eine auf diesem aufliegende und mit dem Verteilerteller (17) umlaufende Dichtungsscheibe (39) mit Durchbrüchen (40) angeordnet ist, in denen der untere Teil (22) der Dosierkammern (23) sitzt.

9. Vorrichtung nach einem der Ansprüche 1 bis 8, dadurch gekennzeichnet, daß an der Abschüttstation (4) wenigstens eine Düse (42) von oben in die sich leerende Dosierkammer (23) gerichtet ist, und daß diese Düse (42) über ein Schaltventil (44) mit Schutzgas versorgt wird.

## Claims

1. Apparatus for the volumetric measurement of quantities of bulk material in a protective atmosphere, having a bulk-material feed (25, 26, 27), having a distributor plate (17) which circulates about a vertical axis and has a plurality of apportioning chambers (23) arranged at regular intervals on a pitch circle, having a stationary shut-off plate (18) which is congruent with the distributor plate (17) and has an outlet opening (28) at the discharge location (4), and having a protective-gas feed device, characterized in that arranged in the shut-off plate (18), in the region of the circulatory path of the apportioning chambers (23), are nozzles (32) for protective gas which are connected to a protective-gas source (35), and in that a covering plate (41) covers the introduction opening of the apportioning chambers (23) on the circulatory path of the latter outside the bulk-material feed (27) in a sealing manner in relation to the distributor plate (17).

2. Apparatus according to Claim 1, characterized in that, with the distributor plate (17) rotated in a stepwise manner, the through-passages (32) for the protective gas are each arranged at the holding stations (1, 2, 3, 6) of the apportioning chambers (23).

3. Apparatus according to Claim 2, characterized in that in each case a plurality of through-passages (32) for the protective gas are arranged in the region of a holding station (1, 2, 3, 6).

4. Apparatus according to Claim 3, characterized in that gas flow meters (34) are connected into the feed lines (33) for feeding the protective gas to the through-passages (32) in the shut-off plate (18).

5. Apparatus according to Claim 4, characterized in that in each case one gas flow meter (34) is arranged in each of the feed lines (33).

6. Apparatus according to one of Claims 1 to 5, characterized in that a filter is arranged in the through-passages (32) for the protective gas.

7. Apparatus according to Claim 6, characterized in that the filter consists of sintered material.

8. Apparatus according to one of Claims 1 to 7, characterized in that arranged congruently with the shut-off plate (18) is a sealing disc (39) which rests on said shut-off plate, circulates with the distributor plate (17) and has through-openings (40) in which the bottom part (22) of the apportioning chambers (23) is seated.

9. Apparatus according to one of Claims 1 to 8, characterized in that, at the discharge station (4), at least one nozzle (42) is directed into the emptying apportioning chamber (23) from above, and in that said nozzle (42) is supplied with protective gas via a control valve (44).

## Revendications

1. Dispositif de dosage volumétrique de quantités de produits en vrac sous une atmosphère de gaz de protection comprenant une arrivée du produit en vrac (25, 26, 27), un disque de répartition (17), qui tourne autour d'un axe vertical avec plusieurs chambres de dosage (23), disposées à intervalles égaux sur un arc de cercle, un disque d'obturation (18) égal, à poste fixe par rapport au disque de répartition (17), disque d'obturation (18) qui a un orifice de sortie (28) à l'endroit du déversement (4), et un dispositif d'amenée pour un gaz de protection,
caractérisé en ce qu'
- on dispose dans le disque d'obturation (18) dans la zone du trajet de circulation des chambres de dosage (23) des buses (32) pour le gaz de protection, buses qui sont reliées à une source de gaz de protection (35) et
- une plaque de recouvrement (41) recouvre l'orifice de remplissage des chambres de dosage (23) sur leur trajet de circulation en dehors de l'arrivée du gaz de protection (27) de façon étanche avec le disque de répartition (17).

2. Dispositif selon la revendication 1,
caractérisé en ce que
lorsqu'on fait tourner pas à pas le disque de répartition (17) les passages (32) pour le gaz de protection sont respectivement disposés sur les postes d'arrêt (1, 2, 3, 6) des chambres de dosage (23).

3. Dispositif selon la revendication 2,
caractérisé en ce que
respectivement plusieurs passages (32) sont disposés pour le gaz de protection dans la zone d'un poste d'arrêt (1, 2, 3, 6).

4. Dispositif selon la revendication 3,
caractérisé en ce qu'
on branche dans les conduites (33) pour le gaz de protection allant aux passages (32) dans le disque d'obturation (18) des compteurs (34) du débit du gaz.

5. Dispositif selon la revendication 4,
caractérisé en ce que
dans chacune des conduites (33) il est disposé respectivement un compteur du débit du gaz (34)

6. Dispositif selon l'une des revendications 1 à 5,
caractérisé en ce qu'
on dispose un filtre dans les passages (32) prévus pour le gaz de protection.

7. Dispositif selon la revendication 6,
caractérisé en ce que
le filtre est réalisé en une matière frittée.

8. Dispositif selon l'une des revendications 1 à 7,
caractérisé en ce que
en coïncidence avec le disque d'obturation (18) on dispose un disque d'étanchéité (39) qui repose sur celui-ci et qui tourne avec le disque de répartition (17), avec des ajours (40) dans lesquels se trouve la partie inférieure (22) des chambres de dosage (23).

9. Dispositif selon l'une des revendications 1 à 8,
caractérisé en ce que
- sur le poste de déversement (4)au moins une buse (42) est dirigée d'en haut dans la chambre de dosage (23) en train de se vider, et
- cette buse (42) est alimentée en gaz de protection au moyen d'une vanne de commande (44).
